# EUROPÄISCHE PATENTANMELDUNG

(11) **EP 3 940 016 A1**
(43) Veröffentlichungstag der Anmeldung: **19.01.2022**
(21) Anmeldenummer: 20186169.7
(22) Anmeldetag: 16.07.2020
(51) Int. Cl.: C08G 65/40

(54) **POLYETHERETHERKETONE**

(71) Anmelder: Evonik Operations GmbH, 45128 Essen (DE)
(72) Erfinder: MONDRZYK, Adam, 462 Dorsten (DE); GENSHEIMER, Marco, 47051 Duisburg (DE); DIEKMANN, Wolfgang, 45731Waltrop (DE)
(74) Vertreter: Evonik Patent Association

(57) **Zusammenfassung**

Polyetheretherketon-Copolymere der Formel (I)

⁅ Ar₁-O-Ar₂-O⁆ (I).

Darin umfasst Ar₁ 40 bis 98 mol-%, bevorzugt 65 bis 97 mol-%, an 1,4-Phenylen-Gruppen und 2 bis 60 mol-%, bevorzugt 3 bis 35 mol-%, an X,Y-Naphthylen-Gruppen, wobei X ≠ Y und X,Y unabhängig voneinander einen ganzzahligen Wert von 1 bis 10 annehmen. Die Angaben beziehen sich auf die Stoffmenge an Ar₁, wobei sich alle Gruppen Ar₁ zu 100 mol-% addieren. Der Bestandteil Ar₂ umfasst 2,2'-Bispheylmethanon-Gruppen, 2,4'-Bisphenylmethanon-Gruppen, 3,3'-Bisphenylmethanon-Gruppen, 4,4'-Bisphenylmethanon-Gruppen und Mischungen davon, bevorzugt 4,4'-Bisphenylmethanon-Gruppen. Der Index n ist 10 bis 10000.

Die Copolymere weisen einen verringerten Schmelzpunkt auf und eignen sich für die Herstellung von dreidimensionalen Objekten in Powder Bed Fusion-Verfahren.

## Beschreibung

Die vorliegende Erfindung betrifft Polyetheretherketon-Copolymere, ein Verfahren zu ihrer Herstellung, ihre Verwendung und dreidimensionale Objekte, die aus den Copolymeren erhalten werden können.

In der additiven Fertigung, im Speziellen beim Powder Bed Fusion-Verfahren, werden Materialien benötigt, die u.a. einen geeigneten Schmelzeviskositätsbereich besitzen. Ist die Schmelzeviskosität zu niedrig, fließt die Schmelze über die voreingestellten Bauteilgrenzen in das umliegende Pulverbett und führt so zu Pulveranhaftungen und geringer Konturschärfe. Eine zu hohe Viskosität führt eher dazu, dass die Pulverpartikel im schlimmsten Fall in dem kurzen Zeitfenster des aufgeschmolzenen Zustands nicht oder kaum ineinanderlaufen und infolgedessen ein Bauteil mit geringer Dichte und unzureichenden mechanischen Eigenschaften produziert wird.

Über den Bauprozess hinweg verändert sich das Material aufgrund der längerfristigen thermischen Belastung durch die Bauraumtemperatur, welche üblicherweise rund 20 K unterhalb des Schmelzpunktes liegt. Die Veränderung findet auch bei den Hochtemperaturpolymeren insbesondere in Anwesenheit von Sauerstoff statt. Zu den Hochtemperaturpolymeren zählen Polyaryletherketone wie Polyetheretherketon (PEEK), Polyetherketon (PEK), Polyetherketonketon (PEKK) sowie Polyetherketonetherketonketon (PEKEKK). Mögliche Reaktionsmechanismen während der Temperaturbelastungen können die Nachpolymerisierung und thermisch oder thermooxidativ bedingte Vernetzung und Kettenbruch sein. Dies führt beispielsweise zu einer Veränderung der Schmelzeviskosität. Eine erhöhte Temperatur beschleunigt nach Arrhenius die Alterungsreaktionen. Um Veränderungen des Materials nun so gering wie möglich zu halten (und somit auch eine gewisse Recyclebarkeit des Materials zu gewährleisten, um die Wirtschaftlichkeit des Prozesses zu steigern) ist es also zweckmäßig, a.) sauerstofffrei zu arbeiten, und b.) die Bauraumtemperatur möglichst niedrig zu halten, d.h. zum Beispiel niedrigschmelzende Materialien einzusetzen.

Es bestand nunmehr die Aufgabe, Polyaryletherketone zur Verfügung zu stellen, welche die Nachteile des Standes der Technik nicht aufweisen. Es sollten Polyaryletherketone zur Verfügung gestellt werden, die sich in einem Powder Bed Fusion-Verfahren bei niedrigerer Temperatur verarbeiten lassen, wobei vergleichbar gute mechanischen Eigenschaften erzielt werden.

Gelöst werden konnte die Aufgabe durch Polyetheretherketon-Copolymere der Formel (I)

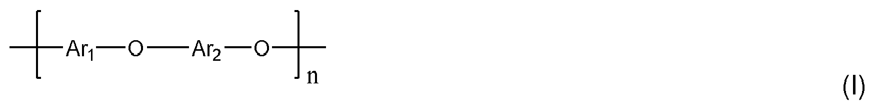

Darin umfasst Ar₁ 40 bis 98 mol-%, bevorzugt 65 bis 97 mol-%, 1,4-Phenylen-Gruppen und 2 bis 60 mol-%, bevorzugt 3 bis 35 mol-%, X,Y-Naphthylen-Gruppen, wobei X ≠ Y und X,Y unabhängig voneinander einen ganzzahligen Wert von 1 bis 10 annehmen, vorzugsweise unabhängig voneinander einen ganzzahligen Wert von 1 bis 8. Bevorzugte Naphthylen-Gruppen sind ausgewählt aus 1,5-Naphthylen-Gruppen, 2,3-Naphthalen-Gruppen und 2,7- Naphthylen-Gruppen, wobei 2,3-Naphthylen-Gruppen und 2,7- Naphthylen-Gruppen besonders bevorzugt sind. Die Angaben beziehen sich auf die Stoffmenge an Ar₁, wobei sich alle Gruppen Ar₁ zu 100 mol-% addieren. Der Bestandteil Ar₂ umfasst 2,2'-Bisphenylmethanon-Gruppen, 2,4'-Bisphenylmethanon-Gruppen, 3,3'-Bisphenylmethanon-Gruppen, 4,4'-Bisphenylmethanon-Gruppen und Mischungen davon, bevorzugt 4,4'-Bisphenylmethanon-Gruppen. Der Index n ist 10 bis 10000.

In einer Ausführungsform der Erfindung umfasst Ar₁ weiterhin 1,3-Phenylen-Gruppen oder 1,2-Phenylengruppen. Eine Verbindung (I) kann sowohl 1,3-Phenylen-Gruppen als auch 1,2-Phenylengruppen enthalten.

Die Verbindungen der Formel (I) sollen im Powder Bed Fusion-Verfahren einsetzbar und verarbeitbar sein. Insofern ist es wichtig, dass die Verbindungen bestimmte Viskositätseigenschaften aufweisen. Daher weisen die erfindungsgemäßen Copolymere (I) vorteilhafterweise einen Melt Volume Rate-Wert (MVR) nach DIN EN ISO 1133 als Maß für die Schmelzeviskosität bei 380 °C zwischen 0,2 mL/10 min und 800 mL/10 min auf, wobei Werte zwischen 5 mL/10 min und 120 mL/10 min bevorzugt und zwischen 10 mL/10 min und 100 mL/10 min besonders bevorzugt sind. Das Andruckgewicht beträgt 5 kg. Liegt die Schmelzeviskosität außerhalb dieser Grenzen, führt dies zu den oben genannten Nachteilen.

Die erfindungsgemäßen Copolymere weisen vorzugsweise eine Polystyrol-äquivalente gewichtsmittlere molare Masse von 3000 g/mol bis 350000 g/mol auf. Die bevorzugte Polystyrol-äquivalente gewichtsmittlere molare Masse liegt bei 5000 g/mol bis 300000 g/mol. Beide Massen lassen sich mittels Gelpermeationschromatographie nach untenstehender Methode ermitteln.

Durch die erfindungsgemäßen Copolymere können die Bauraumtemperaturen gegenüber bekannten Polyaryletherketonen verringert werden. Die Copolymere weisen vorzugsweise Schmelzpunkte von 250 °C bis 330 °C auf, bevorzugt von 280 °C bis 310 °C (gemessen mittels Dynamischer Differenzkalorimetrie DSC nach DIN 53765 bei einer Heizrate von 20 K/min).

Zur Verarbeitung der erfindungsgemäßen Copolymere in Powder Bed Fusion-Verfahren ist es erforderlich, dass die Copolymere in Pulverform vorliegen. Vorzugsweise beträgt der gewichtsmittlere Korndurchmesser d₅₀ bei 10 µm bis 120 µm, vorzugsweise 40 µm bis 90 µm und bevorzugt 50 µm bis 80 µm. Der dso-Wert wird mittels Laserbeugung ermittelt. Pulver können anhand üblicher Verfahren wie Mahlen erhalten werden.

Die Polyetheretherketon-Copolymere der Formel (I) können Additive enthalten. Hierzu zählen Rieselhilfen wie SiO₂ oder Al₂O₃, Pigmente wie TiO₂ oder Ruß, Hitzestabilisatoren wie Organophosphorverbindungen, z. B. Phosphite oder Phosphinate, Flammschutzmittel und Füllstoffen wie Keramikkugeln, Glaskugeln, Glas- oder Carbonfasern sowie Mineralien wie Mica oder Feldspat. SiO₂ als Rieselhilfe weist üblicherweise einen d₅₀ von 5 nm bis 100 nm im Primärpartikel auf. Glaskugeln als Füllstoffe können einen dso-Wert von 10 µm bis 800 µm haben.

Die Copolymere können verschiedene Endgruppen aufweisen. Hierbei ist es möglich, dass die Copolymere mindestens eine Endgruppe aufweisen, die ausgewählt sind aus Halogeniden, vorzugsweise F oder Cl, und OH. Die Endgruppen können durch einen Überschuss eines Monomers enthaltend Ar₁ bzw. Ar₂ erhalten werden. Beispielsweise kann der Überschuss des einen Monomer-Eduktes gegenüber dem anderen Monomer-Edukt bis zu 5 mol-%, vorzugsweise bis zu 3 mol-%, betragen.

Die erfindungsgemäßen Copolymere können beispielsweise zur Herstellung von dreidimensionalen Objekten in Powder Bed Fusion-Verfahren verwendet werden.

Ein weiterer Gegenstand der Erfindung ist ein Verfahren zur Herstellung der erfindungsgemäßen Polyetheretherketon-Copolymeren der Formel (I). Hierbei werden Phenol-Derivate mit Dihalogenbenzophenon-Derivaten als Monomer-Edukte zur Reaktion gebracht. Die Phenol-Derivate umfassen aus 40 bis 98 mol-%, bevorzugt 65 bis 97 mol-%, Hydrochinon und 2 bis 60 mol-%, bevorzugt 3 bis 35 mol-%, X,Y-Naphthalendihydroxid, wobei X ≠ Y und X,Y unabhängig voneinander einen ganzzahligen Wert von 1 bis 10 annehmen, jeweils bezogen auf die Stoffmenge an Phenol-Derivaten, wobei die Summe an Bisphenol-Derivaten zu 100 mol-% addieren. Vorzugsweise nehmen X,Y unabhängig voneinander einen ganzzahligen Wert von 1 bis 8 an. Bevorzugte Hydroxide sind ausgewählt aus 1,5-Naphthalendihydroxid, 2,3-Naphthalendihydroxid und 2,7- Naphthalendihydroxid, wobei 2,3-Naphthalendihydroxid und 2,7- Naphthalendihydroxid besonders bevorzugt sind. Die Dihalogenbenzophenon-Derivate umfassen 2,2'-Bisphenylmethanon-halogenide, 2,4'-Bisphenylmethanon-halogenide, 3,3'-Bisphenylmethanon-halogenide, 4,4'-Bisphenylmethanon-halogenide und Mischungen davon, vorzugsweise 4,4'-Bisphenzylmethanonhalogenide. Bevorzugte Halogenide sind F und Cl, besonders bevorzugt sind Difluorbenzophenon-Derivate. Die Phenol-Derivate und die Dihalogenbenzophenon-Derivate können in äquimolaren Mengen eingesetzt werden. Alternativ kann eins der Derivate gegenüber dem anderen in einem Überschuss von bis 5 mol-%, bevorzugt bis zu 3 mol-% eingesetzt werden.

Die zuvor genannte Reaktion wird vorzugsweise in Gegenwart von Alkalimetallcarbonaten, Alkalimetallchloriden oder Mischungen davon durchgeführt, wobei das Alkalimetall bevorzugt aus Lithium, Natrium und Kalium ausgewählt ist. Bevorzugt werden Carbonate eingesetzt, wobei Natriumcarbonat, Kaliumcarbonat oder Mischungen davon besonders bevorzugt sind.

Ein weiterer Gegenstand der Erfindung sind dreidimensionale Objekte, welche die erfindungsgemäßen Polyetheretherketon-Copolymere enthalten.

### Beispiel

### A. Bestimmungsmethoden

### Schmelzpunkt Tm

Die Bestimmung erfolgte mittels Dynamischer Differenzkalorimetrie im ersten Aufheizen nach DIN 53765 in einer DSC 7-Anlage von Perkin Elmer. Die Heizrate betrug 20 K/min.

### Schmelzeviskosität (Melt Volume Rate, MVR)

Die Bestimmung erfolgte nach DIN EN ISO 1133 bei 380 °C Schmelzetemperatur und 5 kg Andruckgewicht.

### Korngröße

Der d50-Wert wurde mittels Laserbeugung mit einem Malvern Mastersizer 3000 ermittelt. In einer Trockenmessung wurden 20 g bis 40 g eines Pulvers mittels Aero S Trockendispergiergerät zudosiert. Die Zuführrate der Rüttelrinne betrug 55 %, der Dispergierluftdruck 3 bar. Zur Dispergierung wurde eine Standard-Venturi-Düse verwendet. Die Messzeit der Probe betrug 15 s (150000 Einzelmessungen); Die Abschattungseinstellungen betrugen 0,1% (unteres Limit) und 5% (oberes Limit). Die Auswertung erfolgte über die Fraunhofer-Theorie als Volumenverteilung.

### Molare Masse

Zur Ermittlung Mw mittels GPC wird folgender Versuchsaufbau gewählt:

| | |
|---|---|
| Eluent | Chloroform / Dichloressigsäure 80:20 |
| Säulen | PSS polefin, 10 µm, linear xl, ID 8,0 mm x 50 mm |
| | PSS polefin, 10 µm, linear xl, ID 8,0 mm x 300 mm |
| | PSS polefin, 10 µm, linear xl, ID 8,0 mm x 300 mm |
| | PSS polefin, 10 µm, linear xl, ID 8,0 mm x 300 mm |
| Pumpe | PSS SECcurity 1260 HPLC-Pumpe |
| Fluss | 1,0 mL/min |
| Injektionssystem | Agilent 1260 |
| Injektionsvolumen | 50 µl |
| Proben konzentration | 3 g/L |
| Temperatur | 25 °C |
| Detektor | Agilent 1260 Differentialrefraktometer (RID) |
| Auswertung | PSS WinGPC UniChrom Version 8.3 |

Probenvorbereitung: Die Proben wurden auf einer analytischen Waage eingewogen und mit 4 mL Dichloressigsäure versetzt. Die Proben wurden bei 150 °C in 3 Stunden unter leichtem Schütteln vollständig gelöst. Die abgekühlten Lösungen werden in die vierfache Menge an Chloroform gegeben und vor der Messung über einen PTFE-Einmalfilter mit einer Porengröße von 1 µm filtriert.

Kalibrierung und Auswertung: Zunächst wurde eine Kalibrierkurve mit Polystyrol-Standards im Trennbereich der Säulenkombination durchgeführt. Die Berechnung der Molmassenmittelwerte und deren Verteilung erfolgt mittels der Streifenmethode rechnergestützt, basierend auf der Polystyrol-Kalibrierkurve.

### B. Herstellung der Copolymere

### Beispiel 1

Ein 2L Stahlreaktor mit Rührer, Drehmomentaufnahme, Stickstoffeinlass und Stickstoffauslass wurde mit Diphenylsulfon (670 g, 3,07 mol), Hydrochinon (110,11 g, 1,00 mol), 4,4'-Difluorbenzophenon (218,20 g, 1,00 mol) und Natriumcarbonat (117,65 g, 1,11 mol) beschickt. Der Reaktor wurde verschlossen und inertisiert. Hierzu wurde der Reaktor zunächst mit 3 bar Stickstoff beaufschlagt und der Überdruck anschließend abgelassen. Dieser Vorgang wurde sechsmal wiederholt. Danach wurde der Inhalt unter Überschleierung mit Stickstoff mit einer Heizrate von 5 °C/min auf 150 °C erhitzt. Nach dem Aufschmelzen des Diphenylsulfons wurde der Rührer zugeschaltet. Die Temperatur von 150 °C wurde für 50 min gehalten. Nach der Haltephase wurde die Temperatur mit 1°C/min auf 320 °C gesteigert. Die Endtemperatur wurde so lange gehalten, bis eine zuvor festgelegte Drehmomentdifferenz erreicht war. Nach Erreichen der Zieldrehmomentdifferenz wurde das Reaktionsprodukt aus dem Reaktor in eine Schale aus Edelstahl ausgefahren. Nachdem das Reaktionsprodukt abgekühlt war, wurde es vermahlen und mit Aceton und Wasser gewaschen. Das Reaktionsprodukt wurde in einem Ofen bei 80 °C für 24 h getrocknet. Dieser Prozess resultierte in 200 - 250 g eines weißen Polymerpulvers.

### Beispiele 2 - 4

Die methodische Vorgehensweise in den Beispielen 2 - 4 entsprach der in Beispiel 1. Als Unterschied zu Beispiel 1 wurden 20 mol-% Hydrochinon durch ein X,Y-Naphthylen ersetzt.

In der folgenden Tabelle sind die Daten der Beispiele zusammengefasst. In allen Fällen ist Ar₂ eine 4,4'-Bisphenylmethanon-Gruppe.

**Tabelle 1. Kenndaten der hergestellten Polymere und Copolymere**

| **#** | **n (Ar₁ = 1,4-Phenylen) in mol-%** | **n (Ar₁ = X,Y-Naphthylen) in mol-%** | **X,Y** | **Tm in °C** | **MVR in mL/10 min** |
|---|---|---|---|---|---|
| 1* | 100 | --- | --- | 340 | 21 |
| 2 | 80 | 20 | 2,3 | 296 | 18 |
| 3 | 80 | 20 | 2,7 | 308 | 46 |

| | | | | | |
|---|---|---|---|---|---|
| * nicht erfindungsgemäß | | | | | |

Die erfindungsgemäßen Copolymere 2 und 3 haben einen niedrigeren Schmelzpunkt als das PEEK-Polymer des Beispiels 1. Insofern kann die Copolymere in Powder Bed Fusion-Verfahren bei niedrigerer Temperatur verarbeiten werden als das PEEK des Standes der Technik.

## Patentansprüche

1. Polyetheretherketon-Copolymere der Formel (I) 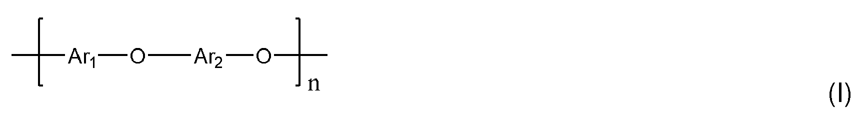 worin bedeuten
Ar₁ umfasst
a) 40 bis 98 mol-% an 1,4-Phenylen-Gruppen,
b) 2 bis 60 mol-% an X,Y-Naphthylen-Gruppen, wobei X ≠ Y und X,Y unabhängig voneinander einen ganzzahligen Wert von 1 bis 10, besonders bevorzugt unabhängig voneinander einen ganzzahligen Wert von 1 bis 8, annehmen,
jeweils bezogen auf die Stoffmenge an Ar₁, wobei sich alle Gruppen Ar₁ zu 100 mol-% addieren,
Ar₂ umfasst 2,2'-Bisphenylmethanon-Gruppen, 2,4'-Bisphenylmethanon-Gruppen, 3,3'-Bisphenylmethanon-Gruppen, 4,4'-Bisphenylmethanon-Gruppen und Mischungen davon, und
n ist 10 bis 10000.

2. Polyetheretherketon-Copolymere nach Anspruch 1, **dadurch gekennzeichnet, dass** Ar₁ umfasst
65 bis 97 mol-% an 1,4-Phenylen-Gruppen und
3 bis 35 mol-% an X,Y-Naphthylen-Gruppen.

3. Polyetheretherketon-Copolymere nach einem der vorherigen Ansprüche, **dadurch gekennzeichnet, dass** Gruppen Ar₁ weiterhin 1,3-Phenylen-Gruppen oder 1,2-Phenylen-gruppen umfasst.

4. Polyetheretherketon-Copolymere nach einem der vorherigen Ansprüche, **dadurch gekennzeichnet, dass** die Copolymere mindestens eine Endgruppe aufweist, die ausgewählt ist aus Halogeniden, vorzugsweise F oder Cl, und OH.

5. Polyetheretherketon-Copolymere nach einem der vorherigen Ansprüche, **dadurch gekennzeichnet, dass** Ar₂ ein 4,4'-Bisphenylmethanon-Gruppe ist.

6. Polyetheretherketon-Copolymere nach einem der vorherigen Ansprüche, **dadurch gekennzeichnet, dass** die Copolymere einen MVR-Wert (Melt Volume Rate, 380 °C, 5 kg) nach DIN EN ISO 1133 zwischen 0,2 mL/10 min und 800 mL/10 min, vorzugsweise zwischen 5 mL/10 min und 120 mL/10 min, aufweisen.

7. Polyetheretherketon-Copolymere nach einem der vorherigen Ansprüche, **dadurch gekennzeichnet, dass** die Polystyrol-äquivalente gewichtsmittlere molare Masse 3000 g/mol bis 350000 g/mol beträgt, ermittelt mittels Gelpermeationschromatographie.

8. Polyetheretherketon-Copolymere nach einem der vorherigen Ansprüche, **dadurch gekennzeichnet, dass** sie einen Schmelzpunkt von 250 °C bis 330 °C, bevorzugt von 280 °C bis 310 °C aufweisen, gemessen mittels Dynamischer Differenzkalorimetrie nach DIN 53765 bei einer Heizrate von 20 K/min.

9. Polyetheretherketon-Copolymere nach einem der vorherigen Ansprüche, **dadurch gekennzeichnet, dass** die Copolymere als Pulver vorliegen und der gewichtsmittlere Korndurchmesser dso, gemessen mittels Laserbeugung, 10 µm bis 120 µm, vorzugsweise 40 µm bis 90 µm, und bevorzugt 50 µm bis 80 µm, beträgt.

10. Polyetheretherketon-Copolymeren nach einem der vorherigen Ansprüche, weiterhin enthaltend Additive, welche ausgewählt werden aus Rieselhilfen wie SiO₂ oder Al₂O₃, Pigmente wie TiO₂ oder Ruß, Hitzestabilisatoren wie Organophosphorverbindungen, z.B. Phosphite oder Phosphinate und Füllstoffen wie Keramikkugeln, Glaskugeln, Glas- und Carbonfasern sowie Mineralien wie Mica oder Feldspat.

11. Verfahren zur Herstellung von Polyetheretherketon-Copolymeren nach einem der vorherigen Ansprüche, **dadurch gekennzeichnet, dass** Phenol-Derivate mit Dihalogenbenzophenon-Derivaten zur Reaktion gebracht werden,
wobei die Bisphenol-Derivate umfassen
40 bis 98 mol-% Hydrochinon,
2 bis 60 mol-% X,Y-Dihydroxynaphtalin, wobei X ≠ Y und X,Y unabhängig voneinander einen ganzzahligen Wert von 1 bis 10 annehmen, besonders bevorzugt unabhängig voneinander einen ganzzahligen Wert von 1 bis 8,
jeweils bezogen auf die Stoffmenge an Bisphenol-Derivaten, wobei die Summe an Bisphenol-Derivaten zu 100 mol-% addieren, und
wobei die Dihalogenbenzophenon-Derivate 2,2'-Bisphenylmethanon-halogeniden, 2,4'-Bisphenylmethanon-halogeniden, 3,3'-Bisphenylmethanon-halogeniden, 4,4'-Bisphenylmethanon-halogeniden und Mischungen davon umfassen.

12. Verfahren nach Anspruch 11, wobei die Reaktion in Gegenwart von Alkalimetallcarbonaten, Alkalichloriden oder Mischungen davon durchgeführt wird.

13. Verwendung von Polyetheretherketon-Copolymeren nach einem der Ansprüche 1 bis 10 zur Herstellung von dreidimensionalen Objekten in Powder Bed Fusion-Verfahren.

14. Dreidimensionales Objekt enthaltend Polyetheretherketon-Copolymere der Ansprüche 1 bis 10.
